# EUROPÄISCHE PATENTSCHRIFT

(11) **EP 2 919 145 B1**
(45) Veröffentlichungstag und Bekanntmachung des Hinweises auf die Patenterteilung: **19.09.2018**
(21) Anmeldenummer: 15158324.2
(22) Anmeldetag: 10.03.2015
(51) Int. Cl.: G06F 21/41

(54) **Authentifizierungsvorrichtung, Authentifizierungssystem und Authentifizierungsverfahren**
AUTHENTICATION DEVICE, AUTHENTICATION SYSTEM AND AUTHENTICATION METHOD
DISPOSITIF D'AUTHENTIFICATION, SYSTÈME D'AUTHENTIFICATION ET PROCÉDÉ D'AUTHENTIFICATION

(30) Priorität: 10.03.2014 DE 102014204344
(43) Veröffentlichungstag der Anmeldung: 16.09.2015
(73) Patentinhaber: ecsec GmbH, 96247 Michelau (DE)
(72) Erfinder: Hühnlein, Detlef, 96247 Michelau (DE); Wich, Tobias, 96450 Coburg (DE); Biallowons, Benedikt, 86415 Mehring (DE)
(74) Vertreter: Isarpatent

(56) Entgegenhaltungen:
- EP-A1- 2 645 670
- WO-A1-2009/089943
- WO-A1-2009/123411
- GB-A- 2 448 396
- US-A1- 2007 204 168
- US-A1- 2009 125 991
- US-A1- 2010 250 955
- US-A1- 2011 072 507

## Beschreibung

### GEBIET DER ERFINDUNG

Die Erfindung betrifft eine Authentifizierungsvorrichtung zur Authentifizierung eines Benutzers mit Hilfe eines Benutzersystems anhand mindestens einer Identität. Ferner betrifft die Erfindung ein entsprechendes Authentifizierungssystem und ein entsprechendes Authentifizierungsverfahren.

### TECHNISCHER HINTERGRUND

Unter Authentifizierung versteht man den Nachweis einer behaupteten Eigenschaft, wie zum Beispiel der Identität, einer ersten Partei gegenüber einer zweiten Partei. Die erste und die zweite Partei können eine Person, aber auch ein Gerät sein. Alternativ kann die erste Partei auch ein Dokument oder eine Information sein. In einem Authentifizierungsverfahren authentisiert sich die erste Partei gegenüber der zweiten Partei.

Ihre Authentifizierung kann eine erste Partei beispielsweise erreichen, indem sie die Kenntnis einer Information, zum Beispiel eines Passwortes, nachweist, indem sie in Besitz eines Gegenstands, zum Beispiel eines Schlüssels, ist oder indem sie selbst anwesend ist und ein überprüfbares biometrisches Merkmal, zum Beispiel einen Fingerabdruck, zur Verfügung stellt oder sich nachweislich an einem bestimmten Ort befindet.

Die Authentifizierung von Benutzern, Geräten und Diensten stellt eine der wichtigsten Funktionen zur Sicherung einer Kommunikation dar. Nur durch eine vorangegangene Authentifizierung ist ein vertrauenswürdiger Datenaustausch, zum Beispiel im Online-Banking, möglich. Die Art und Weise, wie eine Authentifizierung erfolgt, wird durch sogenannte Authentifizierungsprotokolle beschrieben, die wiederum von entsprechenden Authentifizierungsdiensten umgesetzt werden.

Es existieren eine Vielzahl unterschiedlicher Authentifizierungsprotokolle, die an die jeweilige Anwendung oder unterschiedliche Kommunikationsprotokolle angepasst sind, und eine Vielzahl entsprechender Authentifizierungsdienste, welche die verschiedenen Protokolle umsetzen.

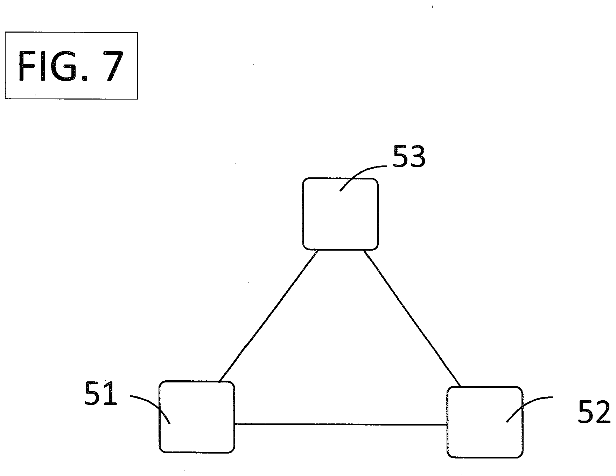

Fig. 7 zeigt ein Blockschaltbild zur Erläuterung eines dem Stand der Technik entsprechenden Systems zur Authentifizierung, wobei ein Benutzersystem 51 mit einem Dienstanbieter 52 und einem Identity Provider 53 gekoppelt ist, wobei der Dienstanbieter 52 und der Identity Provider 53 ebenfalls miteinander gekoppelt sind. Hierbei möchte der Benutzer auf eine geschützte Ressource des Dienstanbieters zugreifen und muss zu diesem Zweck authentifiziert werden. Statt die sicherheitskritische und möglicherweise komplexe Authentifizierung selbst durchzuführen leitet der Dienstanbieter den Benutzer zum Identity Provider weiter, der die Authentifizierung im Auftrag des Dienstanbieters durchführt und das Authentifizierungsergebnis zum Dienstanbieter zurückliefert.

Typischer Weise hat eine natürliche Person mehrere elektronische Identitäten, die eine bestimmte Untermenge an Attributen (z.B. Name, Vorname, Adresse, Kontoverbindung, Versicherungsnummer) umfassen, durch einen in einem bestimmten Kontext eindeutigen Identifikator repräsentiert werden und ein bestimmtes Vertrauensniveau (z.B. gemäß ISO/IEC 29115) aufweisen.

Die benutzerfreundliche Auswahl einer für einen bestimmten Anwendungsfall geeigneten Identität und die auf dieser Basis erfolgende Ermittlung einer für den konkreten Anwendungsfall geeigneten Menge an Authentifizierungsdiensten, die zur Bestimmung der benötigten Identitätsattribute verwendet werden, stellt im Allgemeinen ein herausforderndes Problem dar.

Da eine solche Identität gerade bei höheren Vertrauensstufen (Assurance Levels) mit entsprechenden Chipkarten (z.B. einer nationalen Ausweiskarte, wie z.B. dem neuen deutschen elektronischen Personalausweis, einer elektronischen Gesundheitskarte oder einer Bank- oder Kreditkarte) verbunden ist, kommt neben der eigentlichen Auswahl der Identität und der Bestimmung der dafür geeigneten Authentifizierungsdienste die weitere technische Herausforderung hinzu, das System des Benutzers auf Kompatibilität mit einer vom Benutzer ausgewählten elektronischen Identität zu überprüfen.

Darüber ist es bei einigen der bekannten Authentifizierungssystemen für die Dienstanbieter, die das jeweilige Authentifizierungssystem nutzen wollen, notwendig, für jede Anwendung ein eigenes kostenträchtiges Berechtigungszertifikat zu erwerben. Ein solches Berechtigungszertifikat ermöglicht technisch den Zugriff auf die auf dem Ausweis gespeicherten Daten. Auf der anderen Seite ist es oftmals aus rechtlichen Gründen nicht erlaubt, dass die unter Verwendung des Berechtigungszertifikates ausgelesenen Daten ohne Zutun des Benutzers an Dritte übermittelt werden.

Die WO 2009 / 0 089 943 A1 zeigt ein System, bei welchem zu digitalen Identitäten oder deren Attributen bei einem Benutzer ID-Provider hinterlegt sein können.

### ZUSAMMENFASSUNG DER ERFINDUNG

Es ist eine Aufgabe der vorliegenden Erfindung ein System zur Verfügung zu stellen, mit dem es möglich ist, die oben genannten Nachteile zu umgehen.

Die vorliegende Erfindung stellt dementsprechend eine Authentifizierungsvorrichtung mit den Merkmalen des Patentanspruchs 1, ein Authentifizierungssystem mit den Merkmalen des Patentanspruchs 8 und ein Authentifizierungsverfahren mit den Merkmalen des Patentanspruchs 10 bereit.

Die der vorliegenden Erfindung zu Grunde liegende Erkenntnis besteht darin, dass es heute nur schwer möglich ist, mehrere Identitäten, die geeignet sind eine Authentifizierung durchzuführen, und die damit verbundenen Authentifizierungseinheiten während einer Authentifizierung zu handhaben und die mit den Identitäten verknüpften Identitätsattribute sicher und datenschutzfreundlich zu verwalten.

Die der vorliegenden Erfindung zu Grunde liegende Idee besteht nun darin, dieser Erkenntnis Rechnung zu tragen und eine Authentifizierungsvorrichtung gemäß der vorliegenden Erfindung vorzusehen.

Die erfindungsgemäße Authentifizierungsvorrichtung sieht eine Auswahl- und Vermittlungseinheit vor, die basierend auf Authentifizierungsprozessvorgaben und unter Berücksichtigung der Möglichkeiten und Präferenzen des Benutzers mindestens eine Identität aus einer Menge verfügbarer Identitäten auswählt und eine Authentifizierungsanfrage an entsprechende Authentifizierungseinheiten weiterleitet, die zu den ausgewählten Identitäten die entsprechenden Authentifizierungsprotokolle durchführen können.

Dadurch erleichtert die vorliegende Erfindung die Unterstützung verschiedener Identitäten für den Anbieter von Anwendungsdiensten erheblich, da dieser nur eine Schnittstelle zur erfindungsgemäßen Authentifizierungsvorrichtung und nicht eine Vielzahl von unterschiedlichen Schnittstellen für die unterschiedlichen Authentifizierungsdienste, die für Authentifizierung der verschiedenen Identitäten benötigt werden, benötigt.

Außerdem vereinfacht die vorliegende Erfindung die Handhabung mehrerer Identitäten auch für den Benutzer erheblich, da z.B. basierend auf der jeweiligen Authentifizierungsanfrage die entsprechenden Identitäten ausgewählt werden können, so dass nicht durch den Benutzer die falschen Identitäten für eine Authentifizierungsanfrage gewählt werden, die z.B. nicht die geeigneten Identitätsattribute oder Vertrauensstufen aufweisen.

Ferner sieht die vorliegende Erfindung eine Freigabeeinrichtung vor, die dem zu authentifizierenden Benutzer das Authentifizierungsergebnis und/oder im Rahmen der Authentifizierung bereitgestellte Identitätsattribute zur Freigabeerteilung übermittelt.

Dies bedeutet, dass die Identitätsattribute bzw. das Authentifizierungsergebnis nicht ohne eine Freigabe bzw. eine Zustimmung des Benutzers an die Quelle der Authentifizierungsanfrage übermittelt werden. Dadurch wird eine sichere und datenschutzfreundliche Verwaltung der Identitätsattribute möglich und für die Nutzung z.B. des neuen deutschen Personalausweises wird nicht für jeden Anwendungsdienst ein eigenes Berechtigungszertifikat nötig.

Vorteilhafte Ausgestaltungen und Weiterbildungen ergeben sich aus den Unteransprüchen sowie aus der Beschreibung unter Bezugnahme auf die Figuren.

In einer Ausführungsform weist die Authentifizierungsanfrage eine Anfrage nach Identitätsattributen auf. Zusätzlich oder alternativ ist mit der Authentifizierungsanfrage und in der Authentifizierungsvorrichtung gespeicherten Konfigurationsparametern eine Anfrage nach Identitätsattributen verbunden.

Ferner ist die Auswahl- und Vermittlungseinheit dazu ausgebildet, zu bestimmen, welche der Authentifizierungseinheiten welche der angefragten Identitätsattribute bereitstellen können, und die Authentifizierungsanfrage an die bestimmten Authentifizierungseinheiten weiterzuleiten, wobei die Auswahl- und Vermittlungseinheit ferner dazu ausgebildet ist, die durch die identifizierten Authentifizierungseinheiten bereitgestellten Authentifizierungsergebnisse und/oder Identitätsattribute zu einem zusammengefassten Authentifizierungsergebnis und/oder einer zusammengefassten Identität zusammenzufassen. Dadurch wird es möglich, auf eine Authentifizierungsanfrage zu antworten, zu deren Beantwortung Identitätsattribute aus unterschiedlichen Identitäten notwendig sind. Außerdem kann durch die Verwendung von verschiedenen unabhängigen Quellen für bestimmte Identitätsattribute unter Umständen eine Steigerung der Vertrauensstufe erreicht werden.

In einer Ausführungsform weist die Vermittlungseinheit einen Identitätsspeicher auf, der dazu ausgebildet ist, Daten der zusammengefassten Identitäten und Daten der den zusammengefassten Identitäten jeweils zu Grunde liegenden Identitäten zu speichern und für weitere Authentifizierungsvorgänge bereitzustellen, wobei bei weiteren Authentifizierungsvorgängen die zusammengefasste Identität oder eine zu Grunde liegende Identität genutzt werden kann und unabhängig von der Wahl der genutzten Identität die Identitätsattribute der zusammengefassten Identität bereitgestellt werden. Dies ermöglicht es, zusammengefasste Identitäten erneut zu verwenden, ohne, dass diese erneut zusammengesetzt werden müssten. Hierbei kann in Abhängigkeit von der technischen und kryptographischen Ausgestaltung der zu Grunde liegenden und zusammengefassten Identitäten und den Fähigkeiten der involvierten Trägermedien für diese Identitäten, die beispielsweise in Form einer Chipkarte ausgeprägt sein können, entweder existierendes privates Schlüsselmaterial genutzt oder für die Erstellung der zusammengefassten Identität neues privates Schlüsselmaterial erzeugt werden.

In einer Ausführungsform weist die Freigabeeinrichtung einen Freigabespeicher auf und ist ausgebildet, eine von dem Benutzer erteilte Freigabe für mindestens einen Empfänger zu speichern und die gespeicherte Antwort des Benutzers bei der Übermittlung eines weiteren Authentifizierungsergebnisses an den mindestens einen Empfänger aus dem Speicher auszulesen und als Freigabe des Benutzers für das weitere Authentifizierungsergebnis zu nutzen. Dies ermöglicht ein automatisches Übermitteln z.B. des Authentifizierungsergebnisses und etwaiger Identitätsattribute, falls der Benutzer bereits einmal in die Übermittlung eingewilligt und die Daten für einen bestimmten Empfänger freigegeben hat.

In einer Ausführungsform weist die Auswahl- und Vermittlungseinheit einen Auswahlspeicher auf, welcher ausgebildet ist, eine Identitätsauswahl zu speichern und für weitere Authentifizierungen bereitzustellen. Insbesondere kann eine Auswahl z.B. bezüglich des jeweiligen Empfängers der Authentifizierungsanfrage oder der gewünschten Identitätsattribute gespeichert werden. Dadurch kann z.B. bei einer erneuten Anfrage des Empfängers der Authentifizierungsanfrage die Identitätsauswahl übersprungen bzw. beschleunigt werden, da lediglich die gespeicherte Auswahl abgerufen werden muss.

In einer Ausführungsform ist die Auswahl- und Vermittlungseinheit dazu ausgebildet, eine Identität basierend auf in der Authentifizierungsanfrage enthaltenen und/oder in der Authentifizierungsvorrichtung gespeicherten Konfigurationsparametern automatisch in eine Liste auswählbarer Identitäten aufzunehmen oder aus der Liste auswählbarer Identitäten auszuschließen. Dadurch kann sichergestellt werden, dass nur Identitäten ausgewählt werden, die die Anforderungen der Authentifizierungsanfrage, z.B. bezüglich der angefragten Identitätsattribute oder der geforderten Vertrauensstufe, erfüllen.

In einer Ausführungsform ist die Auswahl- und Vermittlungseinheit ausgebildet, eine für die Authentifizierung zu nutzende Identität basierend auf der Liste auswählbarer Identitäten auszuwählen, wobei die Auswahl- und Vermittlungseinheit ferner ausgebildet ist, die eine Identität lediglich dann in die Liste auswählbarer Identitäten aufzunehmen, wenn das Benutzersystem die technischen Voraussetzungen zur Authentifizierung mit der jeweiligen Identität aufweist. Ferner ist die Auswahl- und Vermittlungseinheit insbesondere dazu ausgebildet, in dem Benutzersystem fehlende technische Voraussetzungen zur Authentifizierung mit der mindestens einen Identität automatisch oder nach Anfrage bei dem Benutzer bereitzustellen. Dies ermöglicht es z.B. einen Treiber für eine Chipkartenanbindung oder die Nutzung eines Trusted Platform Modules oder die Nutzung eines biometrischen Sensors in einem Betriebssystem des Benutzersystems oder ein geeignetes Anwendungssystem zur Nutzung von Chipkarten, Trusted Platform Modulen oder biometrischen Sensoren zu installieren, und so eine weitere Identität für die Authentifizierung bereitstellen oder nutzbar machen zu können.

In einer Ausführungsform ist die Authentifizierungsvorrichtung als eine modulare Sammlung von netzwerkfähigen Programmmodulen ausgebildet, wodurch sie leicht für die Realisierung eines verteilten Systems zur Authentifizierung genutzt werden kann. Hierbei ist mindestens eine Komponente der Authentifizierungsvorrichtung in dem Benutzersystem und/oder einem System eines Dienstanbieters angeordnet, wobei in einer Ausführungsform insbesondere der Dienstanbieter die Authentifizierungsanfrage stellt und das freigegebene Authentifizierungsergebnis an den Dienstanbieter übertragen wird. In diesem Fall kann auch die Auswahleinheit in das System des Dienstanbieters integriert werden, wodurch ein besonders benutzerfreundlicher Ablauf ermöglicht wird.

In einer Ausführungsform ist die Schnittstelleneinheit der Authentifizierungsvorrichtung in der Lage Authentifizierungsanfragen gemäß standardisierter Protokolle entgegenzunehmen und die Authentifizierungsergebnisse über entsprechende Protokolle und Formate zurückzuliefern. Hierbei kommen insbesondere Protokolle wie die Security Assertion Markup Language (SAML) mit unterschiedlichen Bindings und Profilen, das OAuth-Protokoll in Version 1 (RFC 5849) oder Version 2 (RFC 6749) mit unterschiedlichen Profilen wie OpenID Connect oder der Austausch von Web-Service Security Token gemäß WS-Trust in Frage.

In einer weiteren Ausführungsform ist die Auswahl- und Vermittlungseinheit durch eine Kombination aus einem Server- und einem Client-seitigen Teilsystem realisiert. Hierbei ist die Vermittlungseinheit als ein Server-basiertes System ausgestaltet, in dem Konfigurationsparameter für anfragende Anwendungsdienste bzw. Dienstanbieter, unterstützte Identitäten und verfügbare Authentifizierungseinheiten gespeichert sind. Diese Konfigurationsparameter können in einer Ausführungsform über eine Web-basierte Anwendung und z.B. entsprechende RESTbasierte Schnittstellen verwaltet werden.

Hierbei können für einen Anwendungsdienst insbesondere Informationen zu den zulässigen Identitäten und Vertrauensstufen, eine Liste von zwingend oder optional angefragten Identitätsattributen sowie für den Benutzer bestimmte Informationen zur Beschreibung des Anwendungsdienstes, wie z.B. eine Datenschutzrichtlinie oder Informationen zur Sicherheit und Qualität des Anwendungsdienstes, enthalten sein.

Für eine grundsätzlich unterstützte Identität können Informationen zu den von ihr unterstützten Authentisierungsprotokollen, den für ihre Nutzung benötigten Authentifizierungseinheiten und Authentifizierungsdiensten, den von ihr bereitgestellten Identitätsattributen, den technischen Voraussetzungen für die Nutzung der Identität am Benutzersystem und weitere für den Benutzer bestimmte Informationen, z.B. entsprechende Bilder und Nutzungshinweise, vorgesehen sein.

In einer weiteren Ausführungsform ist die Auswahleinheit durch Web-Technologien und im Browser des Benutzers lauffähigen Code, z.B. auf Basis von JavaScript, Flash oder Silverlight, realisiert, der einerseits eine benutzerfreundliche Nutzung ermöglicht und andererseits bei Bedarf überprüft, ob die technischen Voraussetzungen, z.B. eine bestimmte Chipkartenschnittstelle, ein Trusted Platform Module oder ein biometrischer Sensor, für die Nutzung einer bestimmten Identität am Benutzersystem vorhanden sind.

Für die Überprüfung ob die technischen Voraussetzungen für die Nutzung einer bestimmten Identität vorhanden sind, können vielfältige Technologien genutzt werden. Beispielsweise kann mit einem asynchronen JavaScript Request (AJAX) auf die localhost-Schnittstelle des Benutzersystems überprüft werden, ob bereits bestimmte Chipkarten-fähige Anwendungsprogramme auf dem Benutzersystem vorhanden sind. Sofern zwar die entsprechende Hardware vorhanden ist, aber noch Treiber oder Anwendungsprogramme für die Nutzung einer bestimmten Identität benötigt werden, können diese automatisch oder nach Freigabe durch den Benutzer, z.B. unter Verwendung des Java Network Launching Protocol (JNLP) oder über den Download von ausführbaren Installationspaketen installiert werden.

In einer weiteren Ausführungsform kann auch die Freigabeeinrichtung auf Basis von Web-Technologien realisiert sein. Hierbei kann das Authentifizierungsergebnis samt der darin enthaltenen Identitätsattribute insbesondere als XML-basierte Struktur, z.B. in Form einer SAML-Assertion, ausgeprägt sein, so das dieses durch geeignete Transformationen, wie z.B. mittels einer Extensible Stylesheet Language (XSL) Transformation, in das HTML-Format überführt, im Browser angezeigt und schließlich durch einen Knopfdruck des Benutzers durch ein http-POST an den Empfänger weitergeleitet wird.

In einer weiteren Ausführungsform kann die Speicherung von Informationen über präferierte Identitäten, Datenschutzrichtlinien und Freigaben für bestimmte Empfänger in einer datenschutzfreundlichen Weise auf dem Benutzersystem, z.B. über die mit HTML5 eingeführten Local Storage Schnittstellen im Browser, erfolgen. In einer ähnlichen Weise kann über diesen Mechanismus eine datenschutzfreundliche und benutzerzentrierte Protokollierung der Abläufe für Zwecke der Datenschutzkontrolle ermöglicht werden.

In einer weiteren Ausführungsform können die Schnittstelleneinheit, die Auswahl- und Vermittlungseinheit, und die Freigabeeinrichtung komplett auf dem Benutzersystem ablaufen, wodurch eine besonders datenschutzfreundliche Realisierung ermöglicht wird. In diesem Fall können die verschiedenen Teilsysteme auch in einen Treiber des Betriebssystems oder eine Chipkarten-fähige Anwendung integriert sein. In diesem Fall kann die Authentifizierungseinrichtung die Authentifizierungsanfragen lokal am Benutzersystem entgegennehmen, unter Kontrolle des Benutzers an geeignete Authentifizierungseinheiten weiterleiten, umgekehrt die gesicherten Authentifizierungsergebnisse entgegennehmen und nach einer Freigabe durch den Benutzer ganz oder teilweise an den endgültigen Empfänger weiterleiten. In dieser Ausführungsform können statt einer Weiterleitung an externe Authentifizierungseinheiten bei Verwendung von so genannten Attribut-basierten Credentials, z.B. gemäß Idemix oder U-Prove oder unter Verwendung von Hashbäumen oder so genannter Chamäleon-Zertifikate, am Benutzersystem selbst auch entsprechende Beweisdaten für den Nachweis bestimmter Identitätsattribute erstellt werden.

Die obigen Ausgestaltungen und Weiterbildungen lassen sich beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird durch die angehängten, unabhängigen Ansprüche definiert.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer Authentifizierungsvorrichtung gemäß der vorliegenden Erfindung,
- Fig. 2: ein Blockschaltbild einer Ausführungsform eines Authentifizierungssystems gemäß der vorliegenden Erfindung,
- Fig. 3: ein Ablaufdiagramm einer Ausführungsform eines erfindungsgemäßen Verfahrens,
- Fig. 4: ein Blockschaltbild einer weiteren Ausführungsform einer Authentifizierungsvorrichtung gemäß der vorliegenden Erfindung,
- Fig. 5: ein Blockschaltbild einer weiteren Ausführungsform einer Authentifizierungsvorrichtung gemäß der vorliegenden Erfindung,
- Fig. 6: ein Sequenzdiagramm einer weiteren Ausführungsform eines erfindungsgemäßen Verfahrens, und
- Fig. 7: ein Blockschaltbild eines Single Sign-On Systems nach dem Stand der Technik.

In allen Figuren sind gleiche bzw. funktionsgleiche Elemente und Vorrichtungen - sofern nichts Anderes angegeben ist - mit denselben Bezugszeichen versehen worden.

Unter einem Benutzersystem ist im Rahmen dieser Patentanmeldung jedes elektronische System zu verstehen, an welchem ein Benutzer eine Authentifizierung durchführen kann. Beispiele für erfindungsgemäße Benutzersysteme können z.B. Computer, Laptops, Notebooks, Smartphones, Tablet-PCs oder dergleichen sein.

Unter einem Datennetzwerk ist im Rahmen dieser Patentanmeldung jedes Netzwerk zu verstehen, welches in der Lage ist Daten zu übertragen. Dabei kann das erfindungsgemäße Datennetzwerk ein lokales Datennetzwerk, ein internes Datennetzwerk bzw. ein Intranet oder ein öffentliches Datennetzwerk, wie z.B. das Internet sein.

Unter einem Authentifizierungsprotokoll sind im Rahmen dieser Patentanmeldung diejenigen Schritte bzw. Abläufe zu verstehen, die notwendig sind, um eine Authentifizierung basierend auf einer vorgegebenen Identität durchzuführen. Beispiele für Authentifizierungsprotokolle können z.B. das Password Authentication Protocol (PAP), das Challenge-handshake authentication protocol (CHAP), ein Authentisierungsprotokoll gemäß ISO/IEC 9798, das beim neuen Personalausweis eingesetzte Password Authenticated Connection Establishment (PACE) oder das Extended Access Control (EAC) Protokoll oder das im Webumfeld weit verbreitete Transport Layer Security (TLS) Protokoll gemäß RFC 5246 sein.

Unter dem Begriff Authentifizierungsprozessvorgaben sind im Rahmen dieser Patentanmeldung Vorgaben für den Authentifizierungsprozess zu verstehen. Solche Vorgaben können z.B. die Anzahl oder die Art der für eine Authentifizierung verwendbaren Identitäten einschränken. Ferner können solche Vorgaben z.B. auch eine Vertrauensstufe einer Identität vorgeben, die eine entsprechende Identität mindestens erfüllen muss, um für die Authentifizierung genutzt werden zu können.

Eine Vertrauensstufe (engl. Assurance Level) bezeichnet ein Niveau, welches der jeweiligen Identität und den in ihr enthaltenen Identitätsattributen bzgl. ihrer Zuverlässigkeit zugeordnet werden kann. Eine Vorgehensweise für die Bestimmung der Vertrauensstufe ist in ISO/IEC 29115 normiert und betrachtet verschiedene Phasen im Lebenszyklus einer elektronischen Identität, wie die Erzeugung einer elektronischen Identität (Enrolment), die Verwaltung einer elektronischen Identität (Credential Management) und schließlich die Nutzung der elektronischen Identität zur Authentifizierung (Authentication). Beispielsweise weist eine vom Benutzer selbst erstellte und auf einem Benutzernamen und einem Passwort basierende Identität eine geringere Vertrauensstufe auf, als eine auf einer Chipkarte basierende Identität in einem hoheitlichen Ausweisdokument wie dem neuen deutschen Personalausweis.

Unter dem Begriff Identitätsattribute sind im Rahmen dieser Patentanmeldung Attribute zu verstehen, die dem Benutzer in irgendeiner Weise zugeordnet sind und die eine Identität bereitstellen kann, bzw. die durch eine Identität bestätigt werden können. Beispiele für solche Identitätsattribute sind Vorname, Nachname, Adresse (z.B. bestehend aus Straße, Hausnummer, Ort, PLZ, Land), Geschlecht, Geburtsdatum, Nationalität, E-Mail-Adresse, Telefonnummer, Versicherungsnummer, Bankverbindung (z.B. bestehend aus Kontonummer, Kontoinhaber, Bank, Bankleitzahl, Kreditlimit), ein sektorspezifisches Pseudonym, das Alter in Jahren oder die Aussage, dass der Benutzer älter als 18 oder älter als 21 ist.

Unter einer Freigabeerteilung ist im Rahmen dieser Patentanmeldung zu verstehen, dass der Weiterleitung des Authentifizierungsergebnisses bzw. der Identitätsattribute im Rahmen einer Authentifizierung an den Empfänger des Authentifizierungsergebnisses bzw. der Identitätsattribute zugestimmt wird.

Unter dem Begriff Konfigurationsparameter sind im Rahmen dieser Patentanmeldung Parameter zu verstehen, die z.B. in einer Komponente der Authentifizierungsvorrichtung oder der Authentifizierungsvorrichtung selbst hinterlegt bzw. gespeichert sind. Solche Konfigurationsparameter können sich z.B. auf den Dienstanbieter oder die genutzten Identitäten bzw. die damit verbundenen Authentifizierungseinheiten oder Benutzerpräferenzen beziehen.

Die für den Dienstanbieter konfigurierten Daten umfassen beispielsweise grundlegende Benutzerinformationen über den angebotenen Dienst, ein Logo des Dienstes bzw. des Diensteanbieters, die Datenschutzrichtlinien des Dienstanbieters sowie Informationen darüber, welche Identitäten oder Vertrauensstufen für die Nutzung eines bestimmten Dienstes zulässig sind, welche Identitätsattribute in Verbindung mit einer Authentifizierung ermittelt werden sollen und/oder welche Authentifizierungsvorrichtungen bzw. Authentifizierungsdienste für einen Dienstanbieter auf Grund von vertraglichen Vereinbarungen grundsätzlich zur Verfügung stehen.

Die für eine Identität konfigurierten Daten umfassen beispielsweise generelle Benutzerhinweise für die Nutzung der Identität, Informationen darüber mit welchem Sinnbild eine Identität symbolisiert werden soll, welche Authentifizierungsdienste und Authentifizierungsprotokolle für eine Identität grundsätzlich geeignet sind und über welche Schnittstellen diese angesprochen werden können, welche Vertrauensstufe eine Identität besitzt, welche Identitätsattribute eine Identität umfasst und mit welcher Priorität ein bestimmter Authentifizierungsdienst bei Auswahl einer bestimmten Identität angesprochen werden soll.

Zu den Benutzerpräferenzen zählen insbesondere Datenschutzrichtlinien des Benutzers, grundsätzlich vorhandene und bevorzugt zu verwendende Identitäten des Benutzers und beispielsweise Informationen zur bevorzugten und möglicherweise barrierefreien Darstellung von Informationen, wie z.B. Schriftgröße, Sprache, Kontrast und Parameter für die Konfiguration der Sprachunterstützung.

Unter dem Begriff der technischen Voraussetzungen sind diejenigen Voraussetzungen zu verstehen, die notwendig sind, um an dem Benutzersystem eine Identität zu nutzen. Ist die Identität z.B. eine Chipkarten-basierte Identität so kann eine technische Voraussetzung sein, dass ein geeigneter Treiber auf dem Computer des Benutzers installiert ist, der eine Kommunikation zwischen dem Computer des Benutzers und der Chipkarte ermöglicht. Ist die Identität z.B. eine Identität, die auf einem Internetdienst basiert, kann die technische Voraussetzung z.B. sein, dass ein Internetbrowser auf dem Computer des Benutzers installiert und eine entsprechende Internetverbindung vorhanden ist.

### BESCHREIBUNG VON AUSFÜHRUNGSBEISPIELEN

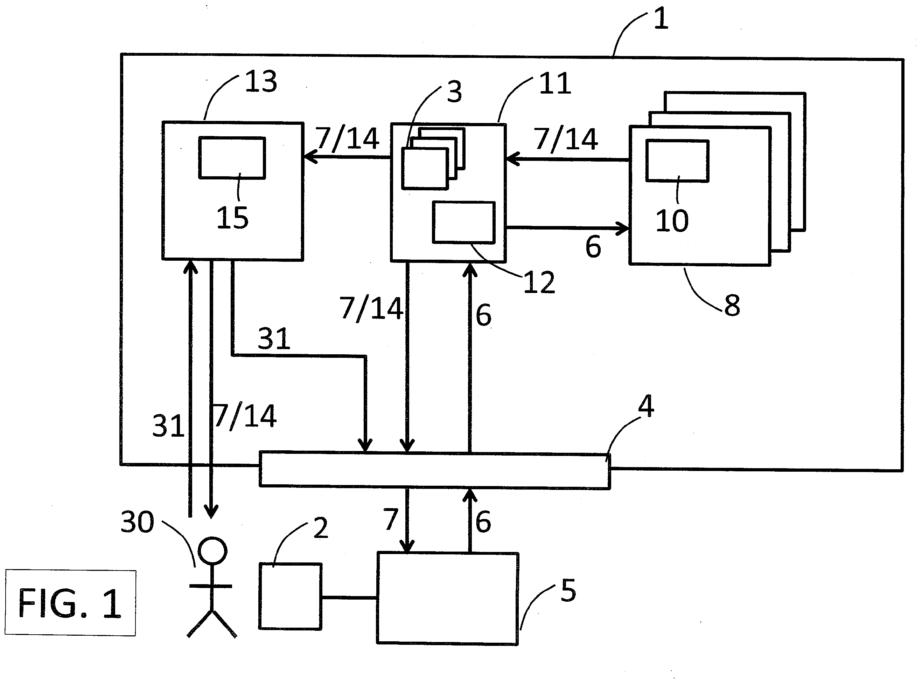

Fig. 1 zeigt ein Blockschaltbild einer Ausführungsform einer Authentifizierungsvorrichtung 1 gemäß der vorliegenden Erfindung zur Authentifizierung eines Benutzers 30 an einem Benutzersystem 2 anhand mindestens einer Identität 3.

Die Authentifizierungsvorrichtung 1 weist eine Schnittstelleneinheit 4 auf, die mit einem Netzwerk 5, z.B. einem lokalen Netz oder dem Internet 5, gekoppelt ist, um eine Authentifizierungsanfrage 6 über das Netzwerk 5 zu empfangen und ein Authentifizierungsergebnis 7 über das Netzwerk 5 auszugeben.

Die Schnittstelleneinheit 4 ist ferner mit einer Auswahl- und Vermittlungseinheit 11 gekoppelt, um dieser die Authentifizierungsanfrage 6 weiterzuleiten und von dieser Authentifizierungsergebnisse 7 zu erhalten. Schließlich ist die Schnittstelleneinheit 4 mit einer Freigabeeinrichtung 13 gekoppelt, von welcher die Schnittstelleneinheit 4 eine Freigabe 31 erhalten kann.

Die Auswahl- und Vermittlungseinheit 11 ist mit mindestens einer Authentifizierungseinheit 8 gekoppelt. Weitere Authentifizierungseinheiten 8 sind in Fig. 1 durch hinter der Authentifizierungseinheiten 8 gezeigte Blöcke angedeutet. Ferner ist die Auswahl- und Vermittlungseinheit 11 mit der Freigabeeinrichtung 13 gekoppelt.

Die Auswahl- und Vermittlungseinheit 11 empfängt in der dargestellten Ausführungsform von der Schnittstelleneinheit 4 eine Authentifizierungsanfrage 6 und wählt in Abhängigkeit von Authentifizierungsprozessvorgaben 12 mindestens eine Identität 3 aus, die zur Authentisierung genutzt werden soll. Weitere Identitäten 3 sind in Fig. 1 durch hinter der Identität 3 gezeigte Blöcke angedeutet. Insbesondere kann die Auswahl- und Vermittlungseinheit 11 auch mehr als eine Identität auswählen, wenn dies z.B. durch die Authentifizierungsprozessvorgaben 12 vorgegeben wird. Dies kann z.B. geschehen, um die Vertrauensstufe der Authentifizierung zu erhöhen oder um Identitätsattribute unterschiedlicher Identitäten 3 in dem Authentifizierungsergebnis 7 kombinieren zu können. Ist lediglich eine einzige Identität 3 vorhanden nutzt die Auswahl- und Vermittlungseinheit 11 in einer Ausführungsform diese einzige Identität 3. Alternativ kann die Auswahl- und Vermittlungseinheit 11 die einzige Identität dem Benutzer 30 anzeigen und die Einrichtung weiterer Identitäten 3 anbieten.

Die Auswahl- und Vermittlungseinheit 11 leitet die Authentifizierungsanfrage 6 daraufhin an die entsprechenden Authentifizierungseinheiten 8 weiter, welche für die ausgewählten Identitäten die entsprechenden Authentifizierungsprotokolle 10 durchzuführen und ein entsprechendes Authentifizierungsergebnisse 7 an die Auswahl- und Vermittlungseinheit 11 zurückliefern.

Die Auswahl- und Vermittlungseinheit 11 leitet die Authentifizierungsergebnisse 7 an die Schnittstelleneinheit 4 und an die Freigabeeinrichtung 13 weiter.

Die Freigabeeinrichtung 13 übermittelt dem Benutzer das Authentifizierungsergebnis 7 und/oder im Rahmen der Authentifizierung ermittelte Identitätsattribute 14 zur Freigabeerteilung. Dabei erfolgt die Übermittlung in Abhängigkeit einer Übermittlungsvorgabe 15. Die Übermittlungsvorgabe gibt dabei z.B. an, ob eine Freigabe durch einen Benutzer notwendig ist oder nicht.

Schließlich gibt die Schnittstelleneinheit 4 das Authentifizierungsergebnis 7 lediglich dann aus, wenn in der Freigabeeinrichtung 13 eine entsprechende Freigabe erteilt wurde und die Übermittlungsvorgabe 15 eine Freigabe vorschreibt.

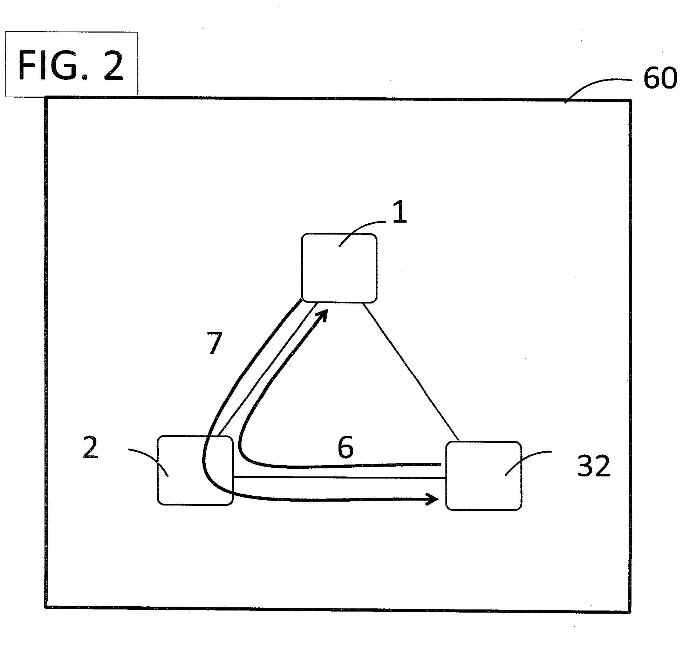

Fig. 2 zeigt ein Blockschaltbild einer Ausführungsform eines Authentifizierungssystems 60 gemäß der vorliegenden Erfindung.

Das Authentifizierungssystem 60 weist eine Authentifizierungsvorrichtung 1 auf, die eine beliebige Ausführungsform der erfindungsgemäßen Authentifizierungsvorrichtung 1 sein kann. Die Authentifizierungsvorrichtung 1 ist mit einem Benutzersystem 2 und mit einem System eines Dienstanbieters 32 gekoppelt.

In Fig. 2 sendet das System des Dienstanbieters 32 eine Authentifizierungsanfrage 6 an das Benutzersystem 2, welches die Authentifizierungsanfrage 6 an die Authentifizierungsvorrichtung 1 weiterleitet. Die Authentifizierungsvorrichtung 1 übermittelt daraufhin das Authentifizierungsergebnis 7 an das Benutzersystem 2, welches das Authentifizierungsergebnis 7 an das System des Dienstanbieters 32 weiterleitet.

Alternativ kann das System des Dienstanbieters 32 auch direkt mit der Authentifizierungsvorrichtung 1 gekoppelt sein und die Authentifizierungsanfrage 6 direkt an die Authentifizierungsvorrichtung 1 senden.

In solch einer aus Ausführungsform kann das Authentifizierungsergebnis 7 wie bereits beschrieben, über das Benutzersystem 2 zurück an das System des Dienstanbieters 32 übermittelt werden oder direkt an das System eines Dienstanbieters 32 übermittelt werden.

In einer Ausführungsform kann die Authentifizierungsvorrichtung 1 als ein verteiltes System ausgebildet sein und mindestens eine Komponente der Authentifizierungsvorrichtung 1 kann in dem Benutzersystem und/oder dem System des Dienstanbieters 32 angeordnet sein. Diese verteilte Form der Authentifizierung wird insbesondere bei Single Sign-On-Systemen und beim so genannten Cloud Computing eingesetzt. In diesem Fall fungiert eine beliebige Cloud-Applikation als Dienstanbieter, der vermittelt über das mit einem Browser oder einer SAML-fähigen Client-Komponente ausgestattete Benutzersystem eine Authentifizierungsanfrage, die beispielsweise als SAML-AuthnRequest ausgeprägt sein kann, an die Authentifizierungsvorrichtung schickt, welche nach dem erfolgten internen Prozessablauf ein entsprechendes Authentifizierungsergebnis, das beispielsweise als SAML-Response ausgeprägt sein kann, zurückschickt.

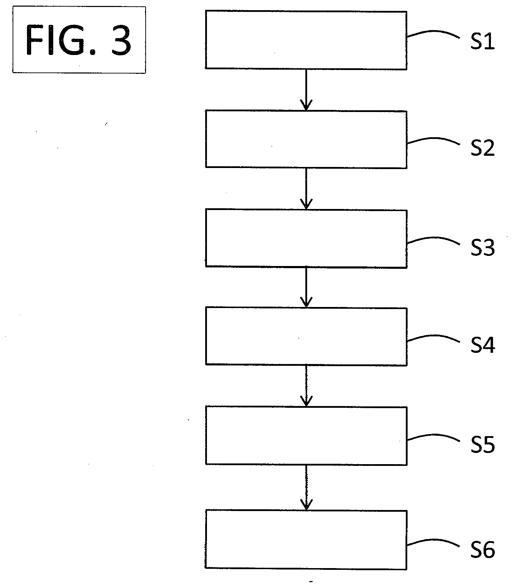

Fig. 3 zeigt ein Ablaufdiagramm einer Ausführungsform eines erfindungsgemäßen Verfahrens zum Authentifizieren eines Benutzers 30 an einem Benutzersystem 2 anhand mindestens einer Identität 3.

In einem ersten Schritt S1 wird eine Authentifizierungsanfrage 6 empfangen. Daraufhin wird in einem zweiten Schritt S2 mindestens eine Identität 3 in Abhängigkeit von Authentifizierungsprozessvorgaben 12 ausgewählt und die Authentifizierungsanfrage 6 in einem dritten Schritt S3 an mindestens eine entsprechende Authentifizierungseinheit 8 weitergeleitet.

Ein vierter Schritt S4 sieht das Durchführen mindestens eines Authentifizierungsprotokolls 10 für die ausgewählte Identität 3 der mindestens einen entsprechenden Authentifizierungseinheiten und das Bereitstellen des entsprechenden Authentifizierungsergebnisses vor.

In einem fünften Schritt S5 werden das Authentifizierungsergebnis und/oder im Rahmen der Authentifizierung ermittelte Identitätsattribute 14 in Abhängigkeit einer Übermittlungsvorgabe 15 an den Benutzer zur Freigabeerteilung weitergeleitet.

Schließlich wird in einem sechsten Schritt S6 das Authentifizierungsergebnis lediglich dann ausgegeben, wenn eine entsprechende Freigabe 31 erteilt wurde, falls die Übermittlungsvorgabe 15 eine Freigabe 31 vorschreibt.

In weiteren Ausführungsformen des Verfahrens, die z.B. in Fig. 3 dargestellt sind, kann die Authentifizierungsanfrage 6 eine Anfrage nach Identitätsattributen 14 aufweisen. Zusätzlich oder alternativ können mit der Authentifizierungsanfrage 6 und Konfigurationsparametern 16 des Authentifizierungsverfahrens eine Anfrage nach Identitätsattributen 14 verbunden sein. In solch einem Fall wird vor dem Durchführen S4 eines Authentifizierungsprotokolls 10 bestimmt, welche der Authentifizierungseinheiten welche der angefragten Identitätsattribute 14 bereitstellen können, und die Authentifizierungsanfrage 6 wird an die bestimmten Authentifizierungseinheiten weitergeleitet. Dabei werden ferner die durch die identifizierten Authentifizierungseinheiten bereitgestellten Authentifizierungsergebnisse 7 und/oder Identitätsattribute 14 zu einem zusammengefassten Authentifizierungsergebnis 7 und/oder einer zusammengefassten Identität 17 zusammengefasst.

In einer weiteren Ausführungsform des Verfahrens können Daten der zusammengefassten Identitäten 17 und Daten der den zusammengefassten Identitäten 17 jeweils zu Grunde liegenden Identitäten 3 z.B. in einem Identitätsspeicher 18 gespeichert und für weitere Authentifizierungsvorgänge bereitgestellt werden. Der hierbei verwendete Identitätsspeicher kann als ein verteiltes System realisiert sein, wobei privates Schlüsselmaterial des Benutzers im Benutzersystem und öffentliches Schlüsselmaterial, Identitätsattribute und administrative Informationen beispielsweise in der _Authentifizierungsvorrichtung abgelegt sein können. Bei weiteren Authentifizierungsvorgängen können die zusammengefassten Identitäten 17 oder eine zu Grunde liegende Identität 3 genutzt werden und unabhängig von der Wahl der genutzten Identität 3 die Identitätsattribute 14 der zusammengefassten Identität 17 bereitgestellt werden. Beispielsweise kann dies dadurch erreicht werden, dass die verschiedenen eindeutigen Identifikatoren und Identitätsattribute der zu Grunde liegenden Identitäten in der Authentifizierungsvorrichtung zentral gespeichert werden und ein Zugriff auf diese Daten mit einer beliebigen zu Grunde liegenden Identität ermöglicht wird. Alternativ kann aus den eindeutigen Identifikatoren und Identitätsattributen der zu Grunde liegenden Identitäten eine zusammengefasste Identität, beispielsweise in Form von Public-Key- und/oder Attribut-Zertifikaten oder Attribut-basierten Credentials gebildet werden, die dezentral beim Benutzersystem gespeichert und angewandt werden kann.

In einer weiteren Ausführungsform kann eine von dem Benutzer erteilte Freigabe 31 für mindestens einen Empfänger z.B. in einem Freigabespeicher 20 gespeichert werden und die gespeicherte Antwort des Benutzers bei der Übermittlung eines weiteren Authentifizierungsergebnisses an den mindestens einen Empfänger als Freigabe 31 des Benutzers 30 für das weitere Authentifizierungsergebnis 7 genutzt werden.

In einer weiteren Ausführungsform wird eine Identitätsauswahl z.B. in einem Auswahlspeicher 21 gespeichert und für weitere Authentifizierungen bereitgestellt.

In einer weiteren Ausführungsform wird eine Identität 3 basierend auf in der Authentifizierungsanfrage 6 enthaltenen und/oder in der Authentifizierungsvorrichtung gespeicherten Konfigurationsparametern 16 und/oder auf Grund der technischen Voraussetzungen des Benutzersystems automatisch in eine Liste auswählbarer Identitäten 22 aufgenommen oder aus der Liste auswählbarer Identitäten 22 ausgeschlossen. Beim Auswählen mindestens einer Identität 3 können dann lediglich in der Liste auswählbarer Identitäten 22 enthaltene Identitäten ausgewählt werden.

In einer weiteren Ausführungsform wird eine Identität 3 lediglich dann in die Liste auswählbarer Identitäten 22 aufgenommen, wenn das Benutzersystem 2 die technischen Voraussetzungen zur Authentifizierung mit der jeweiligen Identität 3 aufweist.

In einer weiteren Ausführungsform können in dem Benutzersystem 2 fehlende technische Voraussetzungen zur Authentifizierung mit der mindestens einen Identität 3 automatisch oder nach Anfrage bei dem Benutzer bereitgestellt bzw. installiert werden.

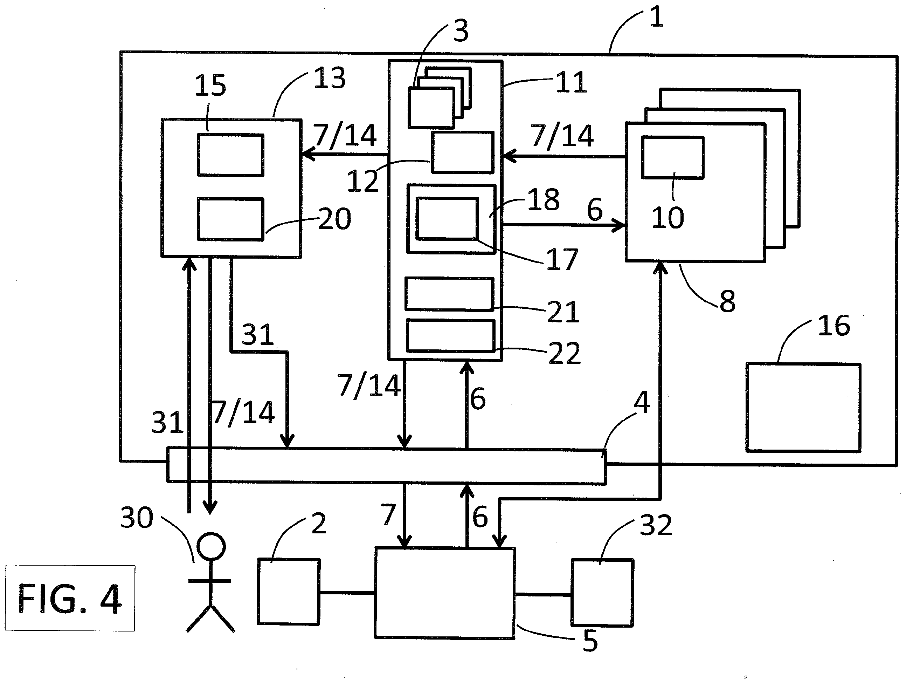

Fig. 4 zeigt ein Blockschaltbild einer weiteren Ausführungsform einer Authentifizierungsvorrichtung 1 gemäß der vorliegenden Erfindung.

Die Authentifizierungsvorrichtung 1 der Fig. 4 basiert auf der Authentifizierungsvorrichtung 1 der Fig. 1.

Die Auswahl- und Vermittlungseinheit 11 der Fig. 4 weist ferner einen Identitätsspeicher 18 auf, der dazu ausgebildet ist, zusammengefasste Identitäten 17 zu speichern.

Zusammengefasst Identitäten 17 sind Identitäten, die aus mehreren Identitäten 3 zusammengesetzt wurden. Beispielsweise können in einer zusammengefassten Identität 17 unterschiedliche Identitätsattribute 14 aus mindestens zwei Identitäten 3 zusammengefasst werden. In dem Identitätsspeicher 18 können ferner Daten der den zusammengefassten Identitäten 17 jeweils zu Grunde liegenden Identitäten 3 gespeichert werden.

Insbesondere können bei weiteren Authentifizierungsvorgängen eine zusammengefasste Identität 17 oder eine dieser zu Grunde liegende Identität 3 zur Authentifizierung genutzt werden. Dabei können dann unabhängig von der Wahl der genutzten Identität 3 die Identitätsattribute 14 der zusammengefassten Identität 17 bereitgestellt werden.

Die Auswahl- und Vermittlungseinheit 11 der Fig. 4 weist ferner einen Auswahlspeicher 21 auf. Der Auswahlspeicher 21 speichert Auswahlen von Identitäten 3, um die gleichen Identitäten für eine erneute Authentifizierung bei z.B. dem gleichen Dienstanbieter 32 zu nutzen, ohne eine erneute Auswahl treffen zu müssen.

Schließlich weist die Auswahl- und Vermittlungseinheit 11 eine Liste auswählbarer Identitäten 22 auf. Diese Liste wird durch die Auswahl- und Vermittlungseinheit 11 mit Identitäten 3 gefüllt, die vorgegebene Kriterien erfüllen. Diese Kriterien können dabei in der Authentifizierungsanfrage 6 enthalten sein. Alternativ oder zusätzlich können solche Kriterien in der Authentifizierungsvorrichtung 1 gespeicherte Konfigurationsparameter 16 sein. Die Liste auswählbarer Identitäten 22 stellt also üblicherweise eine Untermenge aller verfügbaren Identitäten 3 dar. Die Authentifizierungsanfrage 6 bzw. die Konfigurationsparameter 16 können z.B. eine Vertrauensstufe angeben, die eine Identität für eine Authentifizierung mindestens erfüllen muss.

Die Auswahl- und Vermittlungseinheit 11 kann in einer Ausführungsform auch dazu ausgebildet sein, eine Identität 3 lediglich dann in die Liste auswählbarer Identitäten 22 aufzunehmen, wenn das Benutzersystem 2 die technischen Voraussetzungen zur Authentifizierung mit der jeweiligen Identität 3 aufweist. Die technischen Voraussetzungen können dabei z.B. Treiber oder Anwendungsprogramme zur Kommunikation mit einer Chipkarte oder dergleichen betreffen.

Die Auswahl- und Vermittlungseinheit 11 kann bei Fehlen der technischen Voraussetzungen diese fehlenden technischen Voraussetzungen zur Authentifizierung mit der mindestens einen Identität 3 automatisch oder nach Anfrage bei dem Benutzer bereitzustellen. Dazu kann die Auswahl- und Vermittlungseinheit 11 z.B. die Installation von Treibern oder Anwendungsprogrammen auf dem Benutzersystem 2 anstoßen bzw. veranlassen.

Ist mit der Authentifizierungsanfrage 6 eine Anfrage nach Identitätsattributen 14 verbunden oder ist mit der Authentifizierungsanfrage 6 und in der Authentifizierungsvorrichtung gespeicherten Konfigurationsparametern 16 eine Anfrage nach Identitätsattributen 14 verbunden, kann die die Auswahl- und Vermittlungseinheit 11 in einer Ausführungsform bestimmen, welche der Authentifizierungseinheiten 8 welche der angefragten Identitätsattribute 14 bereitstellen können, und die Authentifizierungsanfrage 6 an diese bestimmten Authentifizierungseinheiten 8 weiterleiten.

Dabei kann die Auswahl- und Vermittlungseinheit 11 wie oben bereits erläutert, die durch die identifizierten Authentifizierungseinheiten 8 bereitgestellten Authentifizierungsergebnisse 7 und/oder Identitätsattribute 14 zu einem zusammengefassten Authentifizierungsergebnis 7 und/oder einer zusammengefassten Identität 17 zusammenzufassen und speichern.

In Fig. 4 ist ferner eine Verbindung zwischen der Authentifizierungseinheiten 8 und dem Netzwerk 5 dargestellt. Diese Verbindung dient der Authentifizierungseinheiten 8 dazu, Daten an den Benutzer 32 zu übermitteln, um die eigentliche Authentifizierung durchzuführen und daraufhin ein Authentifizierungsergebnis 7 ausgeben zu können.

Die Freigabeeinrichtung 13 der Fig. 4 weist zusätzlich zu der in Zusammenhang mit Fig. 1 bereits beschriebenen Übermittlungsvorgabe 15 einen Freigabespeicher 20 auf, in dem die Freigabeeinrichtung 13 speichert, wenn ein Benutzer eine Freigabe erteilt hat und diese Freigabe bzw. seine Antwort auf die Freigabeanfrage, die auch eine Ablehnung der Freigabe sein kann, für spätere Authentifizierungsvorgänge weiter nutzen möchte.

Die Verbindung zwischen der Freigabeeinrichtung 13 und dem Benutzer 30 verläuft in Fig. 4 über die Schnittstelleneinheit 4. In weiteren Ausführungsformen kann eine weitere Schnittstelle, z.B. eine Mobilfunkschnittstelle, für die Erteilung der Freigabe durch den Benutzer 2 genutzt werden.

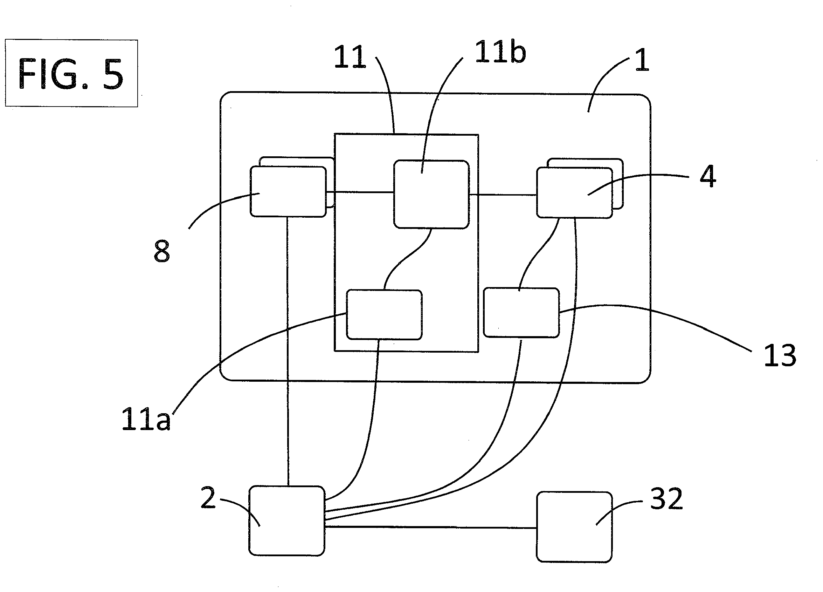

Fig. 5 zeigt ein Blockschaltbild einer weiteren Ausführungsform einer Authentifizierungsvorrichtung 1 gemäß der vorliegenden Erfindung.

In der Ausführungsform der Fig. 5 sind die Komponenten der Authentifizierungsvorrichtung 1 anders angeordnet, als in den Figuren 1 und 3. In weiteren Ausführungsformen sind andere Anordnungen der einzelnen Komponenten ebenfalls möglich.

Die Authentifizierungsvorrichtung 1, auch "Identity Provider" genannt, weist eine oder mehrere aus einem oder mehreren Schnittstelleneinheiten 4, auch "Federation Services" 4 genannt, auf, die mit der zentralen Vermittlungskomponente, der Vermittlungseinheit 11b, oder auch "Identity Broker" 11b genannt, und dem Benutzersystem 2, dem Diensteanbieter 32 sowie der Freigabeeinrichtung 13 gekoppelt ist.

Die Vermittlungseinheit 11b ist mit dem Teilsystem für die Identitätsauswahl, der Auswahleinheit 11a, auch "Identity Selector" 11a genannt, und dem Benutzersystem 2 gekoppelt. Die Vermittlungseinheit 11b ist ferner mit einer Menge an Authentifizierungseinheiten 8, auch "Authentication Backends" 8 genannt, gekoppelt. Diese so genannten "Authentication Backends" können selbst als Authentifizierungseinheit fungieren und die Authentifikation durchführen oder sie können die Authentifizierungsanfrage an eine externe Authentifizierungseinheit weiterleiten und somit gewissermaßen als einfach ausgeprägte Vermittlungseinheit fungieren.

In Fig. 5 sind sowohl die Schnittstelleneinheiten 4, als auch die Freigabeeinrichtung 13, die Auswahleinheit 11a und die Authentifizierungseinheiten 8 mit dem Benutzersystem 2 gekoppelt. Das Benutzersystem 2 selbst ist zusätzlich mit dem Dienstanbieter 32, auch Service Provider 32, genannt gekoppelt. Die Authentifizierung des Benutzers 30 bei dem Service Provider 32 erfolgt also teilweise vermittelt über das Benutzersystem 2.

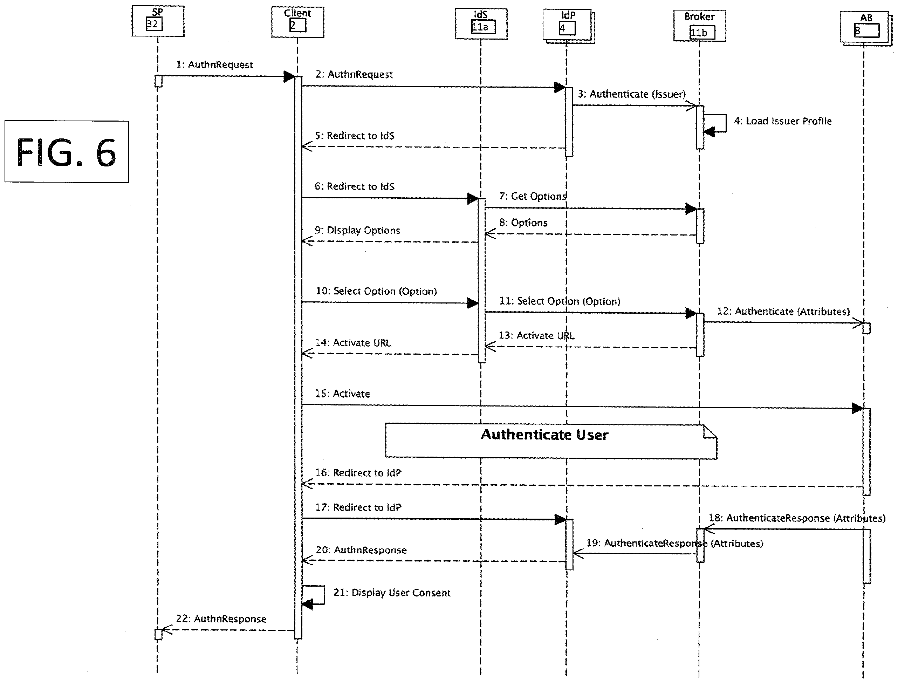

Fig. 6 zeigt ein Sequenzdiagramm einer weiteren Ausführungsform eines erfindungsgemäßen Verfahrens.

Das Sequenzdiagramm beginnt mit einer Anfrage, "1: AuthnRequest", die von einem Dienstanbieter 32, auch "Service Provider" SP, an das Benutzersystem 2, auch "Client" 2, übermittelt wird. Das Benutzersystem 2 leitet die Anfrage an die Schnittstelleneinheit 4, hier auch "Identity Provider" IdP genannt, weiter, "2: AuthnRequest". Hierbei kann es sich beispielsweise um eine AuthnRequest-Nachricht gemäß SAML handeln. Die Schnittstelleneinheit erzeugt daraufhin eine Authenticate-Nachricht, die beispielsweise gemäß CEN TS 15480-3 ausgeprägt sein kann, und leitet diese an die Vermittlungseinheit 11b, auch "Broker" 11b, weiter, "3: Authenticate (issuer)". Hierbei kann insbesondere der Dienstanbieter 32, auch "issuer" genannt, identifiziert werden, welcher die Authentifizierungsanfrage 6 gestellt hat. Die Vermittlungseinheit 11b lädt daraufhin das Profil des Dienstanbieters 32, "4: Load Issuer Profile". Daraufhin leitet die Schnittstelleneinheit 4 das Benutzersystem 2 durch eine Redirect Nachricht, "5: Redirect to IdS", zu der Auswahleinheit 11a, auch "Identity Selector" IdS, weiter. Die Auswahleinheit 11a fragt, nach dem Eintreffen der Anfrage des Benutzersystems 2, "6: Redirect to IdS", von der Vermittlungseinheit 11b die möglichen Optionen für eine Authentifizierung, also unter anderem die möglichen Identitäten 3 ab, "7: get Options". Daraufhin liefert die Vermittlungseinheit 11b die möglichen Optionen für die Authentifizierung, "8: Options", an die Auswahleinheit 11a, welche diese dem Benutzersystem 2 z.B. zur Anzeige weiterleitet, "9: Display Options". Das Benutzersystem 2 meldet daraufhin die ausgewählte Option an die Auswahleinheit 11a, "10: Select Option (Option)", welche die ausgewählte Option an die Vermittlungseinheit 11b weiterleitet, "11: Select Option (Option)", welche bei der Authentifizierungseinheit 8, hier auch "Authentication Backend" (AB), den Prozess der Authentifizierung anstößt, "12: Authenticate (Attributes)". Hierbei wird unter anderem eine Liste der im Zuge der Authentifizierung zu ermittelnden Identitätsattribute an die Authentifizierungseinheit übermittelt. Die Vermittlungseinheit 11b übermittelt daraufhin eine URL an die Auswahleinheit 11a, "13: Activate URL", welche diese dem Benutzersystem 2 weiterleitet, "14: Activate URL". Daraufhin ruft das Benutzersystem 2 die URL auf, "15: Activate", welche das Benutzersystem 2 zu der Authentifizierungseinheit 8 führt, welche die Authentifizierung des Benutzers 30 mit Hilfe des dem Benutzersystems durchführt, Block "Authenticate User".

Nach erfolgter Authentifizierung wird der Benutzer von der Authentifizierungseinheit 8 zu der Schnittstelleneinheit 4 geleitet, "16: Redirect to IdP", "17: Redirect to IdP". Die Schnittstelleneinheit 4 erhält von der Vermittlungseinheit 11b, das Authentifizierungsergebnis 7 samt der ermittelten Identitätsattribute 14, "19: AuthenticateResponse (Attributes)", welches die Vermittlungseinheit 11b von der Authentifizierungseinheit 8 erhalten hat, "18: AuthenticateResponse (Attributes)". Die AuthenticateResponse-Nachricht kann insbesondere gemäß CEN TS 15480-3 ausgeprägt sein. Schließlich leitet die Schnittstelleneinheit 4 das Authentifizierungsergebnis 7, das insbesondere als SAML-Response ausgeprägt sein kann, an das Benutzersystem 2 weiter, "20: AuthnRespone", welches dem Benutzer 30 das Authentifizierungsergebnis 7 zur Freigabe anzeigt, "21: Display User Consent". Wenn der Benutzer 30 eine Freigabe erteilt, wird das Authentifizierungsergebnis 7 samt der Identitätsattribute 14 an den Dienstanbieter 32 weitergeleitet.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Insbesondere können in einer alternativen Ausgestaltungsform die die Komponenten der Authentifizierungsvorrichtung 1 auch in dem Benutzersystem 2 oder bei dem Dienstanbieter 32 angeordnet sein. Ferner können die Funktionen der einzelnen Komponenten auf andere als den hier genannten Komponenten verteilt werden.

Der Begriff "Schnittstelle" bezieht sich nicht nur auf eine Hardwareschnittstelle, wie z.B. eine Netzwerkschnittstelle, sondern kann sich auch auf eine Schnittstelle zwischen Programmmodulen beziehen.

In ähnlicher Weise bezieht sich der Begriff "Datennetzwerk" auf beliebige Möglichkeiten der Datenübertragung, wie z.B. das Internet, ein lokales Netzwerk oder die Datenübertragung zwischen Prozessen und Programmmodulen auf einem Computersystem.

Die in dieser Patentanmeldung als Komponenten der Authentifizierungseinrichtung 1 genannten Einheiten und Einrichtung können in einer Ausführungsform zumindest teilweise als Programm-module ausgebildet sein, die auf einem Computer ausgeführt werden.

### Bezugszeichenliste

- 1: Authentifizierungsvorrichtung
- 2: Benutzersystem
- 3: Identität
- 4: Schnittstelleneinheit
- 5: Datennetzwerk
- 6: Authentifizierungsanfrage
- 7: Authentifizierungsergebnis
- 8: Authentifizierungseinheit
- 10: Authentifizierungsprotokoll
- 11: Auswahl- und Vermittlungseinheit
- 11a: Auswahleinheit
- 11b: Vermittlungseinheit

- 12: Authentifizierungsprozessvorgaben
- 13: Freigabeeinrichtung
- 14: Identitätsattribute
- 15: Übermittlungsvorgabe
- 16: Konfigurationsparameter
- 17: zusammengefasste Identität
- 18: Identitätsspeicher
- 20: Freigabespeicher
- 21: Auswahlspeicher
- 22: Liste auswählbarer Identitäten

- 30: Benutzer
- 31: Freigabe
- 32: Dienstanbieter

- 51: Benutzersystem
- 52: Dienstanbieter
- 53: Identity Provider

- 60: Authentifizierungssystem
- S1 - S6: Verfahrensschritt

## Patentansprüche

1. Authentifizierungsvorrichtung (1) zur Authentifizierung eines Benutzers (30) mit Hilfe eines Benutzersystems (2) anhand mindestens einer Identität (3) aus einer Menge verfügbarer Identitäten (3),
mit mindestens einer Schnittstelleneinheit (4), über die die Authentifizierungsvorrichtung mit mindestens einem Datennetzwerk (5) koppelbar ist und welche dazu ausgelegt ist, eine Authentifizierungsanfrage (6) zu empfangen und ein Authentifizierungsergebnis (7) auszugeben;
mit mindestens einer Authentifizierungseinheit (8), welche ausgebildet ist, mindestens ein Authentifizierungsprotokoll (10) für mindestens eine Identität (3) durchzuführen und als Antwort auf die Authentifizierungsanfrage (6) mindestens ein Authentifizierungsergebnis (7) bereitzustellen;
mit einer Auswahl- und Vermittlungseinheit (11), welche dazu ausgebildet ist, in Abhängigkeit von Authentifizierungsprozessvorgaben (12) mindestens eine Identität (3) auszuwählen und die Authentifizierungsanfrage (6) an mindestens eine entsprechende Authentifizierungseinheit (8) weiterzuleiten sowie die ausgewählten Authentifizierungsergebnisse (7) auszugeben;
mit einer Freigabeeinrichtung (13), welche dem Benutzer (30) das Authentifizierungsergebnis (7) und/oder im Rahmen der Authentifizierung ermittelte Identitätsattribute (14) in Abhängigkeit einer Übermittlungsvorgabe (15) zur Freigabeerteilung übermittelt,
wobei die Schnittstelleneinheit (4) ausgebildet ist, das Authentifizierungsergeonis (7) lediglich dann auszugeben, wenn in der Freigabeeinrichtung (13) eine entsprechende Freigabe (31) erteilt wurde, falls die Übermittlungsvorgabe (15) eine Freigabe (31) vorschreibt;
wobei die Authentifizierungsanfrage (6) eine Anfrage nach Identitätsattributen (14) aufweist und/oder mit der Authentifizierungsanfrage (6) und in der Authentifizierungsvorrichtung gespeicherten Konfigurationsparametern (16) eine Anfrage nach Identitätsattributen (14) verbunden ist; und
die Auswahl- und Vermittlungseinheit (11) dazu ausgebildet ist, zu bestimmen, welche der Authentifizierungseinheiten (8) welche der angefragten Identitätsattribute (14) bereitstellen können, und die Authentifizierungsanfrage (6) an die bestimmten Authentifizierungseinheiten (8) weiterzuleiten
**dadurch gekennzeichnet, dass** die Auswahl- und Vermittlungseinheit (11) ferner dazu ausgebildet ist, die durch die identifizierten Authentifizierungseinheiten (8) bereitgestellten Authentifizierungsergebnisse (7) und/oder Identitätsattribute (14) zu einer zusammengefassten Identität (17) zusammenfassen;
wobei die Auswahl- und Vermittlungseinheit (11) einen Identitätsspeicher (18) aufweist, der dazu ausgebildet ist, Daten der zusammengefassten Identitäten (17) und Daten der den zusammengefassten Identitäten (17) jeweils zu Grunde liegenden Identitäten zu speichern und für weitere Authentifizierungsvorgänge bereitzustellen;
wobei bei weiteren Authentifizierungsvorgängen die zusammengefasste Identität (17) oder eine zu Grunde liegende Identität (3) genutzt werden kann und unabhängig von der Wahl der genutzten Identität (3) die Identitätsattribute (14) der zusammengefassten Identität (17) bereitgestellt werden.

2. Authentifizierungsvorrichtung nach Anspruch 1, wobei der Identitätsspeicher (18) als ein verteiltes System ausgebildet ist.

3. Authentifizierungsvorrichtung nach einem der vorherigen Ansprüche, wobei privates Schlüsselmaterial der Identität (3) des Benutzers (30) im Benutzersystem (2) und öffentliches Schlüsselmaterial, Identitätsattribute und administrative Informationen der Identität (3) in der Authentifizierungsvorrichtung (1) abgelegt sind; und/oder wobei zusammengefasste Identitäten (17 in Form von Public-Key- und/oder Attribut-Zertifikaten oder Attribut-basierten Credentials gebildet sind, die dezentral beim Benutzersystem (2) gespeichert und angewandt werden.

4. Authentifizierungsvorrichtung nach einem der vorherigen Ansprüche,
**dadurch gekennzeichnet,**
**dass** die Freigabeeinrichtung (13) einen Freigabespeicher (20) aufweist und ausgebildet ist, eine von dem Benutzer (30) erteilte Freigabe (31) für mindestens einen Empfänger zu speichern und die gespeicherte Antwort des Benutzers (30) bei der Übermittlung eines weiteren Authentifizierungsergebnisses an den mindestens einen Empfänger aus dem Speicher auszulesen und als Freigabe (31) des Benutzers (30) für das weitere Authentifizierungsergebnis (7) zu nutzen; und/oder
**dass** die Auswahl- und Vermittlungseinheit (11) einen Auswahlspeicher (21) aufweist, welcher ausgebildet ist, eine Identitätsauswahl zu speichern und für weitere Authentifizierungen bereitzustellen.

5. Authentifizierungsvorrichtung nach einem der vorherigen Ansprüche,
**dadurch gekennzeichnet,**
**dass** die Auswahl- und Vermittlungseinheit (11) dazu ausgebildet ist, eine Identität (3) basierend auf in der Authentifizierungsanfrage (6) enthaltenen und/oder in der Authentifizierungsvorrichtung gespeicherten Konfigurationsparametern (16) automatisch in eine Liste auswählbarer Identitäten (22) aufzunehmen oder aus der Liste auswählbarer Identitäten (22) auszuschließen.

6. Authentifizierungsvorrichtung nach Anspruch 5,
**dadurch gekennzeichnet,**
**dass** die Auswahl- und Vermittlungseinheit (11) ausgebildet ist, eine für die Authentifizierung zu nutzende Identität (3) basierend auf der Liste auswählbarer Identitäten (22) auszuwählen;
wobei die Auswahl- und Vermittlungseinheit (11) ferner ausgebildet ist, die eine Identität (3) lediglich dann in die Liste auswählbarer Identitäten (22) aufzunehmen, wenn das Benutzersystem (2) die technischen Voraussetzungen zur Authentifizierung mit der jeweiligen Identität (3) aufweist;
wobei die Auswahl- und Vermittlungseinheit (11) insbesondere dazu ausgebildet ist, in dem Benutzersystem (2) fehlende technische Voraussetzungen zur Authentifizierung mit der mindestens einen Identität (3) automatisch oder nach Anfrage bei dem Benutzer (30) bereitzustellen.

7. Authentifizierungsvorrichtung nach einem der vorherigen Ansprüche,
**dadurch gekennzeichnet,**
**dass** die Authentifizierungsvorrichtung (1) als eine modulare Sammlung von netzwerkfähigen Programmmodulen ausgebildet ist und mindestens eines der Programmodule der Authentifizierungsvorrichtung (1) in dem Benutzersystem (2) und/oder einem System eines Dienstanbieters (32) angeordnet ist, wobei insbesondere der Dienstanbieter die Authentifizierungsanfrage (6) stellt.

8. Authentifizierungssystem (60), zur Authentifizierung eines Benutzers (30) anhand mindestens einer Identität (3) aus einer Menge verfügbarer Identitäten (3),
mit einer Authentifizierungsvorrichtung (1) nach einem der vorherigen Ansprüche;
mit einem Benutzersystem (2), welches mit der Authentifizierungsvorrichtung (1) gekoppelt ist; und
mit einem System eines Dienstanbieters (32), welches mit dem Benutzersystem (2) und/oder der Authentifizierungsvorrichtung (1) gekoppelt ist;
wobei das System eines Dienstanbieters (32) ausgebildet ist, eine Authentifizierungsanfrage (6) an das Benutzersystem (2) und/oder die Authentifizierungsvorrichtung (1) zu senden, wobei das Benutzersystem (2) dazu ausgebildet ist, eine erhaltene Authentifizierungsanfrage (6) an die Authentifizierungsvorrichtung (1) weiterzuleiten und ein freigegebenes Authentifizierungsergebnis zum System des Dienstanbieters zu übermitteln.

9. Authentifizierungssystem nach Anspruch 8,
**dadurch gekennzeichnet,**
**dass** die Authentifizierungsvorrichtung (1) als ein verteiltes System ausgebildet ist und mindestens eine Komponente der Authentifizierungsvorrichtung (1) in dem Benutzersystem und/oder dem System des Dienstanbieters (32) angeordnet ist.

10. Authentifizierungsverfahren zum Authentifizieren eines Benutzers (30) mit Hilfe eines Benutzersystems (2) anhand mindestens einer Identität (3) aus einer Menge verfügbarer Identitäten (3), mit den Schritten:
Empfangen (S1) einer Authentifizierungsanfrage (6);
Auswählen (S2) mindestens einer Identität (3) in Abhängigkeit von Authentifizierungsprozessvorgaben (12) und Weiterleiten (S3) der Authentifizierungsanfrage (6) an mindestens eine entsprechende Authentifizierungseinheit (8);
Durchführen (S4) mindestens eines Authentifizierungsprotokolls (10) für die ausgewählte Identität (3) der mindestens einen entsprechenden Authentifizierungseinheiten und Bereitstellen des entsprechenden Authentifizierungsergebnisses;
Übermitteln (S5) des Authentifizierungsergebnisses und/oder im Rahmen der Authentifizierung ermittelter Identitätsattribute (14) in Abhängigkeit einer Übermittlungsvorgabe (15) an den Benutzer zur Freigabeerteilung;
Ausgeben (S6) des Authentifizierungsergebnisses lediglich dann, wenn eine entsprechende Freigabe (31) erteilt wurde, falls die Übermittlungsvorgabe (15) eine Freigabe (31) vorschreibt;
wobei die Authentifizierungsanfrage (6) eine Anfrage nach Identitätsattributen (14) aufweist und/oder mit der Authentifizierungsanfrage (6) und Konfigurationsparametern (16) des Authentifizierungsverfahrens eine Anfrage nach Identitätsattributen (14) verbunden ist; und
vor dem Durchführen (S4) mindestens eines Authentifizierungsprotokolls (10) bestimmt wird, welche der Authentifizierungseinheiten welche der angefragten Identitätsattribute (14) bereitstellen können, und die Authentifizierungsanfrage (6) an die bestimmten Authentifizierungseinheiten weitergeleitet wird
**dadurch gekennzeichnet, dass** die durch die identifizierten Authentifizierungseinheiten bereitgestellten Authentifizierungsergebnisse (7) und/oder Identitätsattribute (14) zu einer zusammengefassten Identität (17) zusammengefasst werden;
wobei Daten der zusammengefassten Identitäten (17) und Daten der den zusammengefassten Identitäten (17) jeweils zu Grunde liegenden Identitäten gespeichert werden und für weitere Authentifizierungsvorgänge bereitgestellt werden;
wobei bei weiteren Authentifizierungsvorgängen die zusammengefasste Identität (17) oder eine zu Grunde liegende Identität (3) nutzbar sind und unabhängig von der Wahl der genutzten Identität (3) die Identitätsattribute (14) der zusammengefassten Identität (17) bereitgestellt werden.

11. Authentifizierungsverfahren nach Anspruch 10, wobei die Daten der zusammengefassten Identitäten (17) und die Daten der den zusammengefassten Identitäten (17) jeweils zu Grunde liegenden Identitäten in einem verteilten System gespeichert werden.

12. Authentifizierungsverfahren nach einem der vorherigen Ansprüche 10 und 11, wobei privates Schlüsselmaterial der Identität (3) des Benutzers (30) im Benutzersystem (2) und öffentliches Schlüsselmaterial, Identitätsattribute und administrative Informationen der Identität (3) in der Authentifizierungsvorrichtung (1) abgelegt werden; und/oder
wobei zusammengefasste Identitäten (17 in Form von Public-Key- und/oder Attribut-Zertifikaten oder Attributbasierten Credentials gebildet sind, die dezentral beim Benutzersystem (2) gespeichert und angewandt werden.

13. Authentifizierungsverfahren nach einem der vorherigen Ansprüche 10 bis 12,
**dadurch gekennzeichnet,**
**dass** eine von dem Benutzer erteilte Freigabe (31) für mindestens einen Empfänger gespeichert wird und die gespeicherte Antwort des Benutzers bei der Übermittlung eines weiteren Authentifizierungsergebnisses an den mindestens einen Empfänger als Freigabe (31) des Benutzers für das weitere Authentifizierungsergebnis (7) genutzt wird; und/oder
**dass** eine Identitätsauswahl gespeichert wird und für weitere Authentifizierungen bereitgestellt wird.

14. Authentifizierungsverfahren nach einem der vorherigen Ansprüche 10 bis 13,
**dadurch gekennzeichnet,**
**dass** eine Identität (3) basierend auf in der Authentifizierungsanfrage (6) enthaltenen und/oder in der Authentifizierungsvorrichtung gespeicherten Konfigurationsparametern (16) automatisch in eine Liste auswählbarer Identitäten (22) aufgenommen wird oder aus der Liste auswählbarer Identitäten (22) ausgeschlossen wird;
wobei beim Auswählen mindestens einer Identität (3) lediglich in der Liste auswählbarer Identitäten (22) enthaltene Identitäten ausgewählt werden.

15. Authentifizierungsverfahren nach Anspruch 14,
**dadurch gekennzeichnet,**
**dass** eine Identität (3) lediglich dann in die Liste auswählbarer Identitäten (22) aufgenommen wird, wenn das Benutzersystem (2) die technischen Voraussetzungen zur Authentifizierung mit der jeweiligen Identität (3) aufweist;
wobei insbesondere in dem Benutzersystem (2) fehlende technische Voraussetzungen zur Authentifizierung mit der mindestens einen Identität (3) automatisch oder nach Anfrage bei dem Benutzer bereitgestellt werden.

## Claims

1. Authentication device (1) for authenticating a user (30) by means of a user system (2) with the aid of at least one identity (3) from a set of available identities (3), having at least one interface unit (4), via which the authentication device can be coupled to at least one data network (5) and which is configured to receive an authentication request (6) and to output an authentication result (7);
having at least one authentication unit (8) which is configured to perform at least one authentication protocol (10) for at least one identity (3) and to provide at least one authentication result (7) in response to the authentication request (6);
having a selection and switching unit (11) which is configured, in dependence upon authentication process specifications (12), to select at least one identity (3) and to forward the authentication request (6) to at least one corresponding authentication unit (8) and to output the selected authentication results (7);
having a release device (13) which transmits to the user (30) the authentication result (7) and/or identity attributes (14), determined during the authentication, in dependence upon a transmission specification (15) for granting the release,
wherein the interface unit (4) is configured to output the authentication result (7) only when a corresponding release (31) has been granted in the release device (13) if the transmission specification (15) prescribes a release (31);
wherein the authentication request (6) comprises a request for identity attributes (14) and/or a request for identity attributes (14) is connected to the authentication request (6) and configuration parameters (16) stored in the authentication device; and
the selection and switching unit (11) is configured to determine which of the authentication units (8) can provide which of the requested identity attributes (14), and to forward the authentication request (6) to the determined authentication units (8),
**characterised in that** the selection and switching unit (11) is further configured to combine the authentication results (7) and/or identity attributes (14) provided by the identified authentication units (8) to form a combined identity (17);
wherein the selection and switching unit (11) comprises an identity memory (18) which is configured to store data of the combined identities (17) and data of each of the identities forming the basis of the combined identities (17) and to provide same for further authentication processes;
wherein in further authentication processes the combined identity (17) or an identity (3) forming the basis thereof can be used and the identity attributes (14) of the combined identity (17) are provided independently of the selection of the used identity (3).

2. Authentication device as claimed in claim 1, wherein the identity memory (18) is configured as a distributed system.

3. Authentication device as claimed in any one of the preceding claims, wherein private key material of the identity (3) of the user (30) is stored in the user system (2) and public key material, identity attributes and administrative information of the identity (3) are stored in the authentication device (1); and/or
wherein combined identities (17) in the form of public key and/or attribute certificates or attribute-based credentials are formed which are stored and used locally in the user system (2).

4. Authentication device as claimed in any one of the preceding claims, **characterised in that** the release device (13) comprises a release memory (20) and is configured to store a release (31) granted by the user (30) for at least one recipient and to read-out the stored response of the user (30) from the memory when transmitting a further authentication result to the at least one recipient and to use same as a release (31) of the user (30) for the further authentication result (7); and/or
**in that** the selection and switching unit (11) comprises a selection memory (21) which is configured to store an identity selection and to provide same for further authentications.

5. Authentication device as claimed in any one of the preceding claims, **characterised in that** the selection and switching unit (11) is configured to automatically include an identity (3), based on configuration parameters (16) contained in the authentication request (6) and/or stored in the authentication device, in a list of selectable identities (22) or to exclude said identity from the list of selectable identities (22).

6. Authentication device as claimed in claim 5, **characterised in that** the selection and switching unit (11) is configured to select an identity (3), to be used for the authentication, based on the list of selectable identities (22);
wherein the selection and switching unit (11) is further configured to include an identity (3) in the list of selectable identities (22) only when the user system (2) comprises the technical prerequisites for authentication with the respective identity (3);
wherein the selection and switching unit (11) is configured in particular to provide - automatically or upon request by the user (30) - technical prerequisites not present in the user system (2) for authentication with the at least one identity (3).

7. Authentication device as claimed in any one of the preceding claims, **characterised in that** the authentication device (1) is configured as a modular collection of network-compatible program modules and at least one of the program modules of the authentication device (1) is arranged in the user system (2) and/or a system of a service provider (32), wherein in particular the service provider makes the authentication request (6) .

8. Authentication system (60) for authenticating a user (30) with the aid of at least one identity (3) from a set of available identities (3),
comprising an authentication device (1) as claimed in any one of the preceding claims;
comprising a user system (2) which is coupled to the authentication device (1); and
comprising a system of a service provider (32) which is coupled to the user system (2) and/or the authentication device (1);
wherein the system of a service provider (32) is configured to send an authentication request (6) to the user system (2) and/or the authentication device (1), wherein the user system (2) is configured to forward a received authentication request (6) to the authentication device (1) and to transmit a released authentication result to the system of the service provider.

9. Authentication system as claimed in claim 8, **characterised in that** the authentication device (1) is configured as a distributed system and at least one component of the authentication device (1) is arranged in the user system and/or the system of the service provider (32) .

10. Authentication method for authenticating a user (30) by means of a user system (2) with the aid of at least one identity (3) from a set of available identities (3), comprising the steps of:
receiving (S1) an authentication request (6);
selecting (S2) at least one identity (3) in dependence upon authentication process specifications (12) and forwarding (S3) the authentication request (6) to at least one corresponding authentication unit (8);
performing (S4) at least one authentication protocol (10) for the selected identity (3) of the at least one corresponding authentication unit and providing the corresponding authentication result;
transmitting (S5) the authentication result and/or identity attributes (14), determined during the authentication, in dependence upon a transmission specification (15) to the user for granting the release;
outputting (S6) the authentication result only when a corresponding release (31) has been granted, if the transmission specification (15) prescribes a release (31) ;
wherein the authentication request (6) comprises a request for identity attributes (14) and/or a request for identity attributes (14) is connected to the authentication request (6) and configuration parameters (16) of the authentication method; and
prior to performing (S4) at least one authentication protocol (10), a determination is made as to which of the authentication units can provide which of the requested identity attributes (14), and the authentication request (6) is forwarded to the determined authentication units, **characterised in that** the authentication results (7) and/or identity attributes (14) provided by the identified authentication units are combined to form a combined identity (17);
wherein data of the combined identities (17) and data of each of the identities forming the basis of the combined identities (17) are stored and provided for further authentication processes;
wherein in further authentication processes the combined identity (17) or an identity (3) forming the basis thereof can be used and the identity attributes (14) of the combined identity (17) are provided independently of the selection of the used identity (3).

11. Authentication method as claimed in claim 10, wherein the data of the combined identities (17) and the data of each of the identities forming the basis of the combined identities (17) are stored in a distributed system.

12. Authentication method as claimed in any one of the preceding claims 10 and 11, wherein private key material of the identity (3) of the user (30) is stored in the user system (2) and public key material, identity attributes and administrative information of the identity (3) are stored in the authentication device (1); and/or wherein combined identities (17) in the form of public key and/or attribute certificates or attribute-based credentials are formed which are stored and used locally in the user system (2).

13. Authentication method as claimed in any one of the preceding claims 10 to 12, **characterised in that** a release (31) granted by the user for at least one recipient is stored and the stored response of the user (30) is used when transmitting a further authentication result to the at least one recipient as a release (31) of the user for the further authentication result (7); and/or
**in that** the identity selection is stored and provided for further authentications.

14. Authentication method as claimed in any one of the preceding claims 10 to 13, **characterised in that** an identity (3), based on configuration parameters (16) contained in the authentication request (6) and/or stored in the authentication device, is automatically included in a list of selectable identities (22) or is excluded from the list of selectable identities (22);
wherein, when selecting at least one identity (3), merely identities contained in the list of selectable identities (22) are selected.

15. Authentication method as claimed in claim 14, **characterised in that** an identity (3) is included in the list of selectable identities (22) only when the user system (2) comprises the technical prerequisites for authentication with the respective identity (3);
wherein in particular technical prerequisites not present in the user system (2) for authentication with the at least one identity (3) are provided automatically or upon request by the user.

## Revendications

1. Dispositif d'authentification (1) pour l'authentification d'un utilisateur (30) à l'aide d'un système utilisateur (2) au moyen d'au moins une identité (3) à partir d'une quantité d'identités disponibles (3),
comportant au moins une unité d'interface (4), qui permet de coupler le dispositif d'authentification à au moins un réseau de données (5) et qui est conçue pour recevoir une demande d'authentification (6) et émettre un résultat d'authentification (7) ;
comportant au moins une unité d'authentification (8), qui est configurée pour exécuter au moins un protocole d'authentification (10) pour au moins une identité (3) et fournir en réponse à la demande d'authentification (6) au moins un résultat d'authentification (7) ;
comportant une unité de sélection et de transmission (11), qui est configurée pour sélectionner au moins une identité (3) en fonction d'instructions de processus d'authentification (12) et pour rediriger la demande d'authentification (6) vers au moins une unité d'authentification (8) correspondante et pour émettre les résultats d'authentification (7) sélectionnés ;
comportant un moyen de validation (13), qui retransmet à l'utilisateur (30) le résultat d'authentification (7) et/ou des attributs d'identité (14) déterminés dans le cadre de l'authentification, en fonction d'une instruction de retransmission (15) pour la délivrance de la validation,
dans lequel l'unité d'interface (4) est configurée pour émettre le résultat d'authentification (7) uniquement lorsque, dans le moyen de validation (13), une validation correspondante (31) a été délivrée dans le cas où l'instruction de retransmission (15) impose une validation (31) ;
dans lequel la demande d'authentification (6) présente une demande d'attributs d'identité (14) et/ou une demande d'attributs d'identité (14) est liée à la demande d'authentification (6) et aux paramètres de configuration (16) enregistrés dans le dispositif d'authentification ; et
l'unité de sélection et de transmission (11) est configurée pour définir les unités d'authentification (8) qui peuvent fournir les attributs d'identité (14) demandés, et pour rediriger la demande d'authentification (6) vers les unités d'authentification (8) définies, **caractérisé en ce**
**que** l'unité de sélection et de transmission (11) est en outre configurée pour regrouper les résultats d'authentification (7) fournis par les unités d'authentification (8) identifiées et/ou les attributs d'identité (14) en une identité (17) regroupée ;
dans lequel
l'unité de sélection et de transmission (11) présente une mémoire d'identités (18) qui est configurée pour enregistrer des données des identités regroupées (17) et des données respectivement à la base des identités regroupées (17) et les fournir à d'autres processus d'authentification ;
dans lequel, dans le cas d'autres processus d'authentification, l'identité (17) regroupée ou une identité (3) qui sert de base peut être utilisée et, en fonction de la sélection de l'identité (3) utilisée, les attributs d'identité (17) de l'identité regroupée (14) sont fournis.

2. Dispositif d'authentification selon la revendication 1, dans lequel la mémoire d'identités (18) est configurée sous la forme d'un système partagé.

3. Dispositif d'authentification selon une des revendications précédentes, dans lequel un matériel de clé privé de l'identité (3) de l'utilisateur (30) dans le système utilisateur (2) et un matériel de clé publique, des attributs d'identité et des informations administratives d'identité (3) sont déposées dans le dispositif d'authentification (1) ; et/ou
dans lequel des identités regroupées (17) sont formées sous la forme de certificats de clé publique et/ou d'attributs ou encore de justificatifs d'identité basés sur des attributs, qui sont enregistrés et appliqués de manière décentralisée dans le système utilisateur (2).

4. Dispositif d'authentification selon une des revendications précédentes,
**caractérisé en ce**
**que** le moyen de validation (13) présente une mémoire de validation (20) et est configuré pour enregistrer une validation (31) délivrée par l'utilisateur (30) pour au moins un destinataire et pour lire à partir de la mémoire la réponse enregistrée de l'utilisateur (30) lors de la retransmission d'un autre résultat d'authentification vers l'au moins un destinataire et l'utiliser comme validation (31) de l'utilisateur (30) pour l'autre résultat d'authentification (7) ; et/ou
en ce que l'unité de sélection et de transmission (11) présente une mémoire de sélection (21) qui est configurée pour enregistrer une sélection d'identités et pour fournir d'autres authentifications.

5. Dispositif d'authentification selon une des revendications précédentes,
**caractérisé en ce**
**que** l'unité de sélection et de transmission (11) est configurée pour enregistrer, automatiquement dans une liste d'identités sélectionnables (22), une identité (3) en se basant sur des paramètres de configuration (16) enregistrés dans le dispositif d'authentification ou pour les exclure de la liste d'identités sélectionnables (22).

6. Dispositif d'authentification selon la revendication 5, **caractérisé en ce**
**que** l'unité de sélection et de transmission (11) est configurée pour sélectionner une identité (3) à utiliser pour l'authentification en se basant sur la liste d'identités sélectionnables (22) ;
dans lequel l'unité de sélection et de transmission (11) est en outre configurée pour enregistrer l'une identité (3) uniquement dans la liste d'identités sélectionnables (22) lorsque le système utilisateur (2) présente les conditions techniques préalables à l'authentification avec l'identité respective (3) ;
dans lequel l'unité de sélection et de transmission (11) est en particulier configurée pour fournir automatiquement ou sur demande auprès de l'utilisateur (30) les conditions techniques manquantes dans le système utilisateur (2) pour l'authentification avec l'au moins une identité (3).

7. Dispositif d'authentification selon une des revendications précédentes,
**caractérisé en ce**
**que** le dispositif d'authentification (1) est configuré sous la forme d'un ensemble modulaire de modules de programme pouvant être mis en réseau et au moins un des modules de programme du dispositif d'authentification (1) est disposé dans le système utilisateur (2) et/ou un système d'un fournisseur de services (32), dans lequel en particulier le fournisseur de services pose la demande d'authentification (6).

8. Système d'authentification (60), pour l'authentification d'un utilisateur (30) au moyen d'au moins une identité (3) à partir d'une quantité d'identités disponibles (3), comportant un dispositif d'authentification (1) selon une des revendications précédentes ;
comportant un système utilisateur (2), qui est couplé au dispositif d'authentification (1) ; et
comportant un système d'un fournisseur de services (32), qui est couplé au système utilisateur (2) et/ou au dispositif d'authentification (1) ;
dans lequel le système d'un fournisseur de services (32) est configuré pour envoyer une demande d'authentification (6) au système utilisateur (2) et/ou au dispositif d'authentification (1), le système utilisateur (2) étant configuré pour rediriger une demande d'authentification (6) reçue vers le dispositif d'authentification (1) et pour retransmettre un résultat d'authentification validé vers le système du fournisseur de services.

9. Système d'authentification selon la revendication 8, **caractérisé en ce**
**que** le dispositif d'authentification (1) est configuré sous la forme d'un système partagé et au moins une composante du dispositif d'authentification (1) est disposée dans le système utilisateur et/ou le système du fournisseur de services (32).

10. Procédé d'authentification pour l'authentification d'un utilisateur (30) à l'aide d'un système utilisateur (2) au moyen d'au moins une identité (3) à partir d'une quantité d'identités disponibles (3), comprenant les étapes consistant à :
recevoir (S1) une demande d'authentification (6) ;
sélectionner (S2) au moins une identité (3) en fonction d'instructions de processus d'authentification (12) et rediriger (S3) la demande d'authentification (6) vers au moins une unité d'authentification (8) correspondante ;
exécuter (S4) au moins un protocole d'authentification (10) pour l'identité (3) sélectionnée de l'au moins une des unités d'authentification correspondantes et fournir le résultat d'authentification correspondant ;
retransmettre (S5) à l'utilisateur le résultat d'authentification et/ou des attributs d'identité (14) déterminés dans le cadre de l'authentification, en fonction d'une instruction de retransmission (15), pour délivrance de la validation ;
émettre (S6) le résultat d'authentification uniquement lorsqu'une validation (31) correspondante a été délivrée et, dans le cas où l'instruction de retransmission (15) impose une validation (31) ;
dans lequel la demande d'authentification (6) présente une demande d'attributs d'identité (14) et/ou une demande d'attributs d'identité (14) est liée à la demande d'authentification (6) et aux paramètres de configuration (16) du procédé d'authentification ; et
avant l'exécution (S4) d'au moins un protocole d'authentification (10), il est défini les unités d'authentification qui peuvent fournir les attributs d'identité demandés (14), et la demande d'authentification (6) est redirigée vers les unités d'authentification définies,
**caractérisé en ce**
**que** les résultats d'authentification (7) fournis par les unités d'authentification identifiées et/ou les attributs d'identité (14) sont regroupés en une identité (17) regroupée ;
dans lequel
les données des identités regroupées (17) et les données respectivement à la base des identités regroupées (17) sont enregistrées et sont fournies à d'autres processus d'authentification ; dans lequel, dans le cas d'autres processus d'authentification, l'identité (17) regroupée ou une identité (3) qui sert de base peut être utilisée et indépendamment de la sélection de l'identité utilisée (3) les attributs d'identité (14) de l'identité regroupée (17) sont fournis.

11. Procédé d'authentification selon la revendication 10, dans lequel les données des identités regroupées (17) et les données respectivement à la base des identités regroupées (17) sont enregistrées dans un système partagé.

12. Procédé d'authentification selon une des revendications précédentes 10 et 11, dans lequel un materiel de clé privé de l'identité (3) de l'utilisateur (30) dans le système utilisateur (2) et un materiel de clé publique, des attributs d'identité et des informations administratives d'identité (3) sont déposées dans le dispositif d'authentification (1) ; et/ou
dans lequel des identités regroupées (17 sont formées sous la forme de certificats de clé publique et/ou d'attributs ou d'identités basées sur des attributs, qui sont enregistrés et appliqués de manière décentralisée dans le système utilisateur (2).

13. Procédé d'authentification selon une des revendications précédentes 10 à 12,
**caractérisé en ce**
**qu'**une validation (31) délivrée par l'utilisateur pour au moins un émetteur est enregistrée et la réponse enregistrée de l'utilisateur lors de la retransmission d'un autre résultat d'authentification vers l'au moins un destinataire est utilisée sous forme de validation (31) de l'utilisateur pour l'autre résultat d'authentification (7) ; et/ou
en ce qu'une sélection d'identité est enregistrée et est fournie pour d'autres authentifications.

14. Procédé d'authentification selon une des revendications précédentes 10 à 13,
**caractérisé en ce**
**qu'**une identité (3) en se basant sur des paramètres de configuration contenus dans la demande d'authentification (6) et/ou enregistrés dans le dispositif d'authentification (16) est enregistrée automatiquement dans une liste d'identités sélectionnables (22) ou est exclue de la liste d'identités sélectionnables (22) ;
dans lequel, lors de la sélection d'au moins une identité (3), sont sélectionnées uniquement les identités contenues dans la liste d'identités sélectionnables (22).

15. Procédé d'authentification selon la revendication 14,
**caractérisé en ce**
**qu'**une identité (3) est enregistrée uniquement dans la liste d'identités sélectionnables (22) lorsque le système utilisateur (2) présente les conditions techniques préalables à l'authentification avec l'identité respective (3) :
dans lequel les conditions techniques manquantes en particulier dans le système utilisateur (2) pour l'authentification avec l'au moins une identité (3) sont fournies automatiquement ou après demande faite auprès de l'utilisateur.
